# EUROPÄISCHE PATENTSCHRIFT

(11) **EP 1 262 653 B1**
(45) Veröffentlichungstag und Bekanntmachung des Hinweises auf die Patenterteilung: **09.03.2005**
(21) Anmeldenummer: 02010025.1
(22) Anmeldetag: 04.05.2002
(51) Int. Cl.: F02M 35/10, F02M 35/104

(54) **Verschweisste Ansaugvorrichtung für eine Brennkraftmaschine**
Welded intake apparatus for an internal combustion engine
Dispositif d'admission soudé pour un moteur à combustion interne

(30) Priorität: 01.06.2001 DE 10126875
(43) Veröffentlichungstag der Anmeldung: 04.12.2002
(73) Patentinhaber: Mann + Hummel GmbH, 71638 Ludwigsburg (DE)
(72) Erfinder: Pietrowski, Herbert, 74385 Pleidelsheim (DE); Klotz, Arthur, 71686 Remseck (DE); Koch, Ingo, 71634 Ludwigsburg (DE); Teschner, Matthias, Dr., 71636 Ludwigsburg (DE)
(74) Vertreter: Voth, Gerhard, Dipl.-Ing.

(56) Entgegenhaltungen:
- EP-A- 0 568 560
- US-A- 4 601 927
- US-A- 6 092 499
- PATENT ABSTRACTS OF JAPAN Bd. 1997, Nr. 11, 28. November 1997 (1997-11-28) & JP 09 195869 A (ASAHI TEC CORP), 29. Juli 1997 (1997-07-29)

## Beschreibung

### Stand der Technik

Die Erfindung betrifft eine Ansaugvorrichtung für eine Brennkraftmaschine, welche aus mindestens zwei miteinander über eine korrespondierende Fügefläche verschweißten Schalen besteht, nach der Gattung des Patentanspruches 1.

Derartige Ansaugvorrichtungen sind z. B. aus der EP 568 560 C1 bekannt. Gemäß diesem Dokument wird die Ansaugvorrichtung, welche als Hohlraumstruktur aus Kunststoff gebildet ist, aus mehreren Schalen zusammengeschweißt, um die in der Struktur vorgesehenen Hohlräume bilden zu können. Dies sind in erster Linie der Sammelraum und die von diesem abzweigenden Saugkanäle. Die Saugkanäle werden bei Ansaugvorrichtungen auf Grund der Einbauverhältnisse und der geforderten Strömungsgeometrie der Ansaugluft häufig gekrümmt ausgeführt. In diesen Fällen muss die Trennfuge, welche die korrespondierenden Fügeflächen für die Verschweißung enthält, ebenfalls gekrümmt ausgebildet sein.

Zur Verschweißung der Schalen der Ansaugvorrichtung wird eine Fügekraft aufgebracht, welche idealerweise senkrecht zur Ausrichtung der Trennfuge steht. Bei gekrümmten Trennfugen muss daher ein Kompromiss gewählt werden, da sich die effektiv zur Verfügung stehende Fügekraft für die Verschweißung bei schräg zur Schweißrichtung geneigten Trennfugen verkleinert. Entsprechend dem genannten Dokument ist eine Neigung von bis zu nicht wesentlich über 60° zu einer Ebene senkrecht zur Richtung der Schweißkraft (kurz: Schweißrichtung) erreichbar.

Die Schweißrichtung wird demnach am günstigsten derart festgelegt, dass die gekrümmte Trennfuge an beiden Enden einen ähnlichen Winkel zur Schweißkraftrichtung aufweist. Hierbei lässt sich ein Ausgleich der bei der Schweißung durch die Neigung der Trennfuge entstehenden Querkräfte erreichen. Allerdings ist eine Ausrichtung der Druckkraft für die Schweißung entsprechend dem dargestellten Optimum häufig aus geometrischen Gründen nicht möglich. Die Schalen des Saugrohres weisen nämlich häufig eine Außenkontur auf, die ein Angreifen des Schweißwerkzeugs in der idealen Schweißrichtung nicht ermöglichen, so dass von dieser abgewichen werden muss. In diesem Fall entstehen nachteilhaft Querkräfte bei dem Schweißvorgang, die durch eine entsprechende Dimensionierung der Schweißwerkzeuge bzw. der Schweißmaschine ausgeglichen werden müssen. Die Auslegung der Geräte auf die hohen Querkräfte hin führt also zu zusätzlichen Kosten, unter denen die Wirtschaftlichkeit der verschweißten Saugrohre leidet. Außerdem können die Querkräfte während des Schweißvorganges ein Auswandern der Schalen erzeugen, welche zu einer verminderten Qualität der Schweißnaht und zu Toleranzproblemen am Fertigteil führen.

Aufgabe der Erfindung ist es daher, eine Ansaugvorrichtung für eine Brennkraftmaschine zu schaffen, welche unabhängig von deren Außengeometrie verschweißt werden kann und dabei ein optimales Ergebnis hinsichtlich der Wirtschaftlichkeit und der Qualität der Schweißnaht erbringt. Diese Aufgabe wird durch die Merkmale des Patentanspruches 1 gelöst.

### Vorteile der Erfindung

Die erfindungsgemäße Lösung der Aufgabe wird vor dem Hintergrund gefunden, dass ein Ausgleich der Querkräfte auf Grund der Geometrie der Trennfuge und der Wahl der Schweißrichtung zumindest teilweise ausgeglichen werden muss. Wird dieser Ausgleich durch die Ausbildung der an der Schweißung beteiligten, in Kontakt stehenden Flächen erzielt, so kann der Ausgleich der Querkräfte im Bauteil selbst erzeugt werden. Dadurch werden die Querkräfte nicht an die Formen weitergegeben, sondern durch das Bauteil selbst aufgefangen. Die Dimensionierung der Schweißwerkzeuge kann dementsprechend geringer ausfallen. Hierdurch werden die Bauteile wirtschaftlicher in ihrer Herstellung. Außerdem lässt sich durch den Querkraftausgleich auf Grund der Bauteilgeometrie auch ein besseres Schweißergebnis hinsichtlich der Schweißnahtgüte erreichen, da ein Auswandern der beiden zu verschweißenden Schalen in Querkraftrichtung durch den Ausgleich der Querkräfte unterbunden wird. Durch die beschriebene Maßnahme lassen sich also weiterhin höhere Anforderungen an die Maßtoleranzen der Ansaugvorrichtung erfüllen. Dies erleichtert weiterhin die Montage des Saugrohres an der Brennkraftmaschine, wodurch die Wirtschaftlichkeit der vorgeschlagenen Lösung sich weiter erhöht.

Die erfindungsgemäße Ansaugvorrichtung besteht in bekannter Weise zumindest aus Kanalstrukturen, welche einen Einlass für die Verbrennungsluft mit zylinderseitigen Austritten miteinander verbinden. Die zylinderseitigen Austritte sind normalerweise in einem Zylinderkopfflansch integriert, der zur Montage der Ansaugvorrichtung an der Brennkraftmaschine dient. Der Einlass mündet meist in einen Sammelraum, von dem aus zumindest ein Saugkanal pro Zylinder zu den zylinderseitigen Austritten führt. Der Sammelraum dient also der Verteilung der Verbrennungsluft auf die einzelnen Zylinder. Die beschriebenen Mindestanforderungen an die Geometrie der Kanalstrukturen kann durch weitere Funktionen ergänzt werden. Es ist z. B. die Realisierung langer und kurzer Saugkanäle möglich, die durch entsprechende Klappen in Abhängigkeit des Betriebszustands der Brennkraftmaschine geschaltet werden können.

Um die komplizierten geometrischen Anforderungen an die Kanalstrukturen zu erfüllen, sind diese zumindest teilweise aus mindestens zwei Schalen gebildet, welche eine Trennfuge aufweisen, entlang derer sie unter Aufbringung einer Druckkraft miteinander verschweißt werden können. Hierbei bietet sich insbesondere das Vibrationsschweißverfahren an, welches eine hoch frequente Relativbewegung zwischen den Schalen erzeugt, wodurch diese an Fügeflächen, welche über die Trennfuge miteinander korrespondieren, aufschmelzen und dadurch verbunden werden. Angepasst an die Komplexität der Geometrie der Ansaugvorrichtung können beliebig viele Einzelschalen miteinander kombiniert werden.

Um die Geometrie der Kanalstrukturen bilden zu können, ist die Trennfuge zwischen den Schalen zumindest in Teilbereichen in einem Winkel von weniger als 90° zu der für die Verschweißung notwendigen Druckkraft ausgerichtet. Hierdurch kommen die bereits erwähnten Querkräfte bei der Verschweißung zustande. Bei dem erfindungsgemäßen Saugrohr weist die Trennfuge korrespondierende Fügeflächen auf. Als Fügeflächen im Sinne der Erfindung werden diejenigen Flächen verstanden, welche notwendig sind, um die beiden Schalen derart miteinander zu verschweißen, dass die Ansaugvorrichtung eine abgedichtete Hohlraumstruktur bildet, welche den geforderten Berstdruck erträgt. Die Summe der Teilbereiche, welche einen Winkel von weniger als 90° zur besagten Druckkraft aufweisen, erzeugen eine resultierende erste Querkraft, welche ungleich Null ist und so auf die Schweißwerkzeuge übertragen wird.

Gekennzeichnet ist die erfinderische Ansaugvorrichtung dadurch, dass in den Schalen korrespondierende Zusatzflächen angeordnet sind, die die genannte resultierende erste Querkraft durch Erzeugung einer zweiten, der ersten Querkraft entgegen gerichteten Querkraft zumindest teilweise ausgleichen. Optimal ist selbstverständlich der vollständige Ausgleich der ersten Querkraft, jedoch stellen sich die beschriebenen Vorteile der Erfindung abgeschwächt auch ein, wenn nur ein teilweiser Ausgleich der Querkraft erreicht wird.

Unter den korrespondierenden Zusatzflächen werden im Sinne der Erfindung diejenigen Flächen verstanden, welche zur Bildung einer abgedichteten Hohlraumstruktur in der bereits erwähnten Weise nicht notwendig sind, sondern lediglich zur Erzeugung der zweiten Querkraft angeordnet werden. Diese Flächen können dabei selbstverständlich Aufgaben übernehmen, die sich aus der Saugrohrkonstruktion ergeben. Es können z. B. zusätzliche Zwischenwände in die Hohlraumstruktur der Ansaugvorrichtung eingebunden werden. Weitere Möglichkeiten der Gestaltung der korrespondierenden Zusatzflächen werden im folgenden genauer angesprochen.

Gemäß einer vorteilhaften Weiterbildung des Erfindungsgedankens wird die Trennfuge derart ausgestaltet, dass diese stetig gekrümmt ist. Durch diese Gestaltung treten keine abrupten Sprünge im Verlauf des Winkels der Trennfuge zur Richtung der Schweißkraft auf. Hierdurch können Schwachstellen an der Schweißnaht in der Wandung der Ansaugvorrichtung vermieden werden. Außerdem lassen sich durch die stetig gekrümmten Trennfugen insbesondere die vorteilhafterweise ebenfalls gekrümmten Saugkanäle in einfacher Weise herstellen.

Die beschriebenen Zusatzflächen können gemäß einer vorteilhaften Ausgestaltung der Erfindung aus einer Verbreiterung der Fügeflächen bestehen. Die Verbreiterung der Fügeflächen wird beispielsweise auf der Seite der gekrümmten Fügelinie vorgesehen, die den geringeren Betrag der Querkräfte in Bezug auf die Schweißrichtung erzeugt. Dadurch erfolgt der Ausgleich der Querkräfte, in dem sich die Gesamtheit der ersten und zweiten Querkraft ausgleicht.

Mit der Verbreiterung der Fügefläche ist eine Vergrößerung der Fügefläche um einen Betrag gemeint, welcher nicht zur Erzeugung einer zuverlässigen Verbindung zwischen den Schalen der Ansaugvorrichtung notwendig ist. Im Sinne des Anspruches 1 ergibt sich also die gesamte Breite des in der Trennfuge angeordneten Schweißwulstes aus der Fügefläche, die eine Mindestbreite zur Erzeugung der zuverlässigen Verbindung aufweist und eine sich jenseits dieser Fügefläche erstreckende Zusatzfläche, eben der Verbreiterung der Fügefläche.

Die dargestellte Gestaltung stellt vorteilhaft eine elegante Variante dar, um die Fügeflächen im Saugrohr unterzubringen. Diese verschwinden in dem durch die Trennfuge gebildeten Schweißfangrand, so dass sich das erfindungsgemäße Saugrohr optisch von den Saugrohren des Standes der Technik nicht unterscheidet. Letztendlich kann der breitere Schweißrand auch zu einer erhöhten Festigkeit des Saugrohres führen. Eine weitere vorteilhafte Ausbildung der Erfindung sieht vor, dass die korrespondierenden Zusatzflächen in Inneren der Schalen angeordnet sind. Dies hat den großen Vorteil, dass an die gefügten Zusatzflächen wesentlich geringere Anforderungen an die Dichtheit zu stellen sind als an die Fügeflächen an den Wandungen der Ansaugvorrichtung. Die Strukturen, die die korrespondierenden Zusatzflächen aufweisen, können zusätzlich weitere Funktionen im Saugrohr erfüllen. Beispielsweise können durch diese Strukturen Zwischenwände gebildet werden, die die Strömung der Ansaugluft leiten bzw. eine akustische Verbesserung des Ansauggeräusches bewirken. Weiterhin können die Zusatzflächen nach Verschweißung des Saugrohres von außen nicht mehr erkannt werden, so dass auch die Optik der Ansaugvorrichtung nicht gestört wird.

Eine weitere vorteilhafte Variante des Saugrohres sieht vor, dass die korrespondierenden Zusatzflächen in Anbindungspunkte zur Befestigung der Ansaugvorrichtung oder von Zusatzaggregaten integriert sind. Derartige Anbindungspunkte werden außen an der Ansaugvorrichtung angebracht und können z. B. aus Befestigungsflanschen bestehen. Zusatzaggregate, die an diese Anbindungspunkte angebracht werden könnten, sind z. B. ein Stellmotor für Schaltklappen im Saugrohr oder die Einspritzdüsen für den Kraftstoff. Weiterhin muss die Ansaugvorrichtung im Motorraum befestigt werden, was außer über den Zylinderkopfflansch auch über weitere Anbindungspunkte erfolgen kann. Bei Verwendung von elastischen Verbindungselementen kann hierdurch z. B. eine Schwingungsdämpfung erreicht werden.

Die Einbindung der Zusatzflächen in die Anbindungspunkte hat den Vorteil, dass kein zusätzlicher Materialaufwand durch Vorsehen der Zusatzflächen entsteht. Außerdem können die Anbindungspunkte damit vorteilhaft im Bereich der Trennfuge angeordnet werden, wodurch eine leichtere Entformbarkeit der Schalen der Ansaugvorrichtung aus der zugehörigen Gussform erfolgen kann.

Eine weitere vorteilhafte Ausbildung der Erfindung sieht vor, dass die Zusatzflächen so stark geneigt sind, dass deren Winkel α zur Druckkraft D einen Winkel von geringer als 24° aufweisen. Hierdurch wird erreicht, dass die Zusatzflächen eine große Querkraft im Verhältnis zu ihrer Fläche erzeugen. Die Probleme, die sich wegen der geringeren effektiven Schweißkraft durch eine Verringerung der Schweißnahtgüte ergeben könnten, können insbesondere bei Vorsehung der Zusatzflächen im Inneren der Ansaugvorrichtung eliminiert werden, da die Druckunterschiede innerhalb der Ansaugvorrichtung wesentlich geringer sind als im Verhältnis zur Umgebung.

Diese und weitere Merkmale von bevorzugten Weiterbildungen der Erfindung gehen außer aus den Ansprüchen auch aus der Beschreibung und der Zeichnung hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnung

Weitere Einzelheiten der Erfindung werden in der Zeichnung anhand von schematischen Ausführungsbeispielen beschrieben. Hierbei zeigen
- Figur 1: den schematischen Teilschnitt durch eine Ansaugvorrichtung in Zweischalentechnik,
- Figur 2: die Ansicht A gemäß Figur 1 als Ausschnitt,
- Figur 3: den Schnitt B - B gemäß Figur 1,
- Figur 4: den Schnitt C - C gemäß Figur 1,
- Figur 5: den Teilschnitt durch eine alternative Ausgestaltung einer Ansaugvorrichtung und
- Figur 6: die perspektivische Ansicht der Unterschale der Ansaugvorrichtung gemäß Figur 5.

### Beschreibung der Ausführungsbeispiele

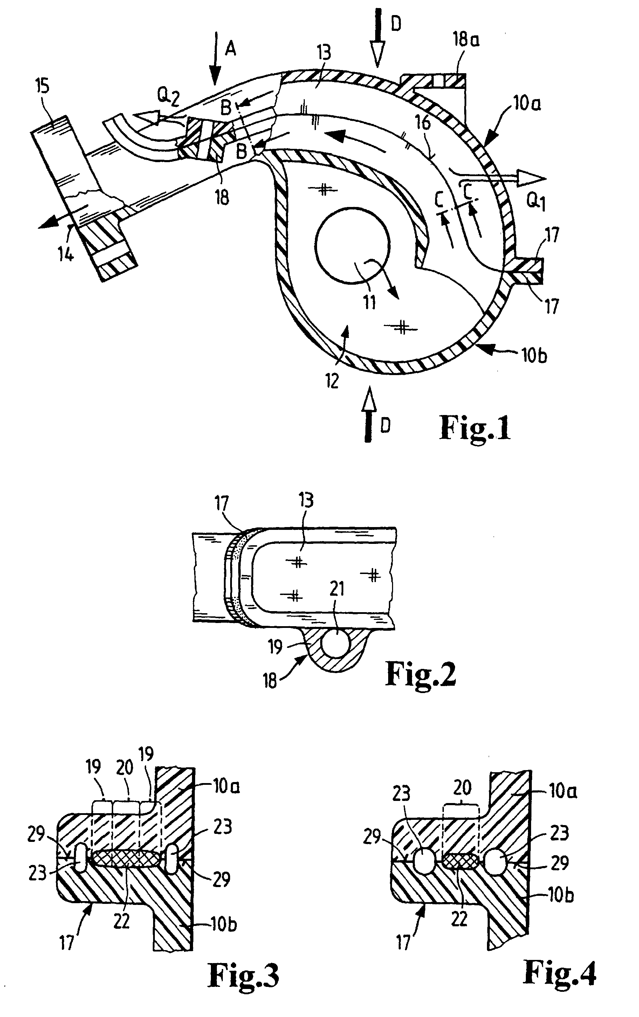

Die Ansaugvorrichtung gemäß Figur 1 weist den bekannten Aufbau mit zwei Schalen 10a, b auf. Diese Schalen bilden den Ansaugweg für die Verbrennungsluft, der durch schmale durchgezogene Pfeile angedeutet ist. Danach strömt die Verbrennungsluft durch einen Einlass 11 in einen Sammelraum 12 der Ansaugvorrichtung und verlässt diesen durch Saugkanäle 13, von denen einer im Schnitt dargestellt ist und durch die die Luft zu zylinderseitigen Austritten 14 geleitet wird, welche mit Hilfe eines Zylinderkopfflansches 15 mit einem nicht dargestellten Zylinderkopf einer Brennkraftmaschine verbunden sind. Die beiden Schalen 10a, b bilden eine Trennfuge 16, die mit einem schematisch angedeuteten Schweißrand 17 versehen sind. Über diesen Schweißrand können die beiden Schalen unter Aufbringung einer Schweißkraft D miteinander verschweißt werden. Bei dem Schweißvorgang entsteht auf Grund der Geometrie der Trennfuge, die stetig gekrümmt ist und daher Teilbereiche mit einem Winkel von weniger als 90° zur Richtung der Druckkraft D aufweist, eine Querkraft Q₁, welche während der Verschweißung eine Neigung der Schalen 10a, b erzeugt, gegeneinander versetzt zu werden. Diese Neigung wird zum einen durch den Gegendruck aufgefangen, der durch die nicht dargestellten Schweißwerkzeuge erzeugt wird, zum anderen ist durch einen Anbindungspunkt 18 eine zweite Querkraft Q₂ gebildet, die der ersten Querkraft Q₁ entgegen gerichtet ist, und auf diese Weise innerhalb der Struktur der Ansaugvorrichtung zu einem Ausgleich der Querkräfte führt. Die Querkräfte Q₁ und Q₂ stellen jeweils die resultierenden Querkräfte dar, welche sich aus der Neigung der Fügeflächen (Q₁) und von dem unter anderem durch den Anbindungspunkt gebildeten Zusatzflächen 19 (Q₂) ergeben.

Die Ausbildung der Zusatzflächen 19 und der Fügeflächen 20 in der Trennfuge der Ansaugvorrichtung gemäß Figur 1 ist den Figuren 2 bis 4 zu entnehmen. In Figur 2 ist zu erkennen, dass der Schweißrand 17 quer über einen der Saugkanäle 13 läuft. Weiterhin ist der Anbindungspunkt 18 zu erkennen, der eine Bohrung 21 zur Aufnahme einer Befestigungsschraube (nicht dargestellt) aufweist. Der Anbindungspunkt ist derart teilweise aufgeschnitten dargestellt, dass sich die Zusatzfläche 19 als schraffierter, aufgeschnittener Bereich ergibt.

Ein weiterer Anbindungspunkt 18a ist in Figur 1 dargestellt. Dieser ist nicht im Bereich der Trennfuge 16 angeordnet sondern auf der Oberfläche der Schale 10a. Dieser Anbindungspunkt führt zu einer Einschränkung bezüglich der Wahl der Richtung D zur Verschweißung der Schalen 10a, b. Daher ist die Druckkraft D entsprechend der in der Figur 1 dargestellten Weise zu wählen und kann nicht weiter geneigt werden, um den Anteil der ersten Querkraft Q₁ zu verringern.

In den Figuren 3 und 4 ist der Schweißrand 17 entsprechend der Schnitte in Figur 1 dargestellt.

Figur 4 zeigt den Schweißrand im Bereich des Schnittes C - C. Es wird deutlich, dass sich im Inneren des Schweißrandes eine Aufschmelzzone 22 befindet, die in ihrer vollen Breite die Fügefläche 20 ergibt. Die Fügefläche 20 wird durch Hohlräume 23 begrenzt, welche zwischen der Fügefläche und Anlageflächen 29 gebildet sind. Die Anlageflächen begrenzen die Axialbewegung der Schalen 10a, b bei Aufbringung der Druckkraft D.

Der Schweißrand 17 gemäß Figur 3 (Schnitt B - B in Figur 1) unterscheidet sich in der Breite der Aufschmelzzone 22. Diese ist in der vollen dargestellten Breite zur Erzeugung der notwendigen Berstdruckfestigkeit der Ansaugvorrichtung nicht notwendig. Hierzu würde vielmehr die Fügefläche 20 genügen. Zur Erzeugung der zweiten Querkraft Q₂ gemäß Figur 1 werden neben den Zusatzflächen 19 gemäß Figur 2 noch die weiteren Zusatzflächen 19 gemäß Figur 3 jeweils rechts und links von der Fügefläche 20 vorgesehen. Dies gibt die vergrößerte Aufschmelzzone 22 im Vergleich zu der in Figur 4 dargestellten, welche gleichzeitig eine erhöhte Festigkeit aufweist. Entsprechend schmaler fallen die Hohlräume 23 aus.

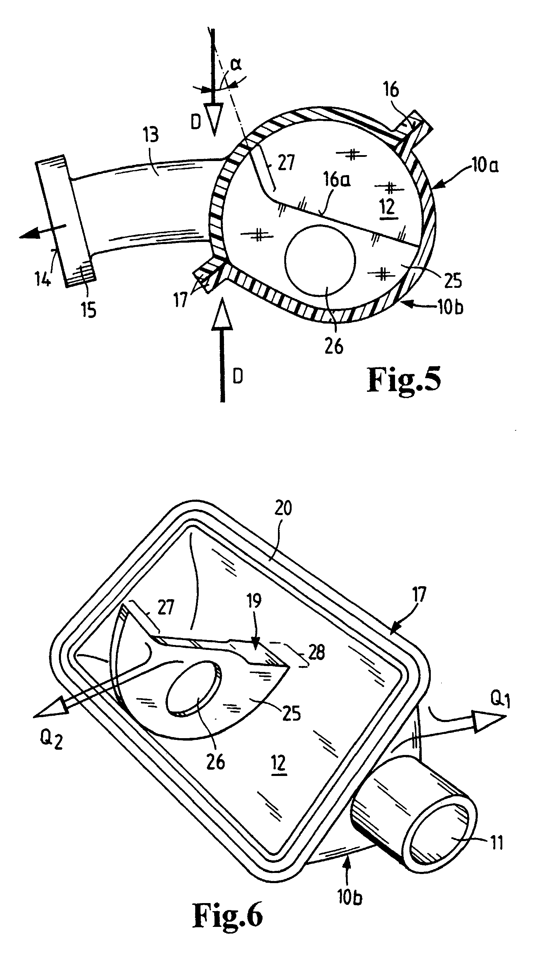

Eine andere Variante einer Ansaugvorrichtung ist in Figur 5 dargestellt. Gleiche oder entsprechende Bauteile sind mit den Bezugszeichen entsprechend Figur 1 versehen. Der Einlass ist jedoch nicht zu sehen. Der aufgeschnittene Sammelraum 12 lässt den Blick auf eine Zwischenwand 25 zu, welche eine Resonanzöffnung 26 aufweist und den Sammelraum in zwei gleich große Teilvolumina trennt. Diese Zwischenwand ist durch eine Trennfuge 16a geteilt und wird jeweils durch die beiden Schalen 10a, b mitgebildet, an die die Teile der Trennwand angegossen sind. Dabei ergibt sich für einen Teilbereich 27 der Trennfuge 16a ein Winkel α gegenüber der Druckkraft D, welcher < 24° ist. Weiterhin ist zu erkennen, dass die Neigung der Trennfuge 16a im Teilbereich 27 sowie auch im restlichen Bereich eine bezüglich zur Druckkraft D entgegengesetzte Neigung im Vergleich zur Trennfuge 16 aufweist, deren Lage man an Hand der Schweißränder 17 erkennen kann und die in diesem Ausführungsbeispiel eben ausgeführt ist.

In Figur 6 ist die Schale 10b der Ansaugvorrichtung als perspektivische Ansicht dargestellt. In dieser Darstellung wird deutlich, dass die Fügefläche 20 wie beschrieben eine entgegengesetzte Ausrichtung zur Zusatzfläche 19 aufweist. Die Zusatzfläche 19 wird durch die Zwischenwand 25 gebildet, wobei an einem Ende ein verbreiterter Bereich 28 angeordnet ist, um den Betrag der auf die dargestellte Schale 10b wirkenden Querkraft Q₂ zu vergrößern. Dieser Querkraft steht die Querkraft Q₁, die durch die Fügefläche 20 erzeugt wird, entgegen.

## Patentansprüche

1. Ansaugvorrichtung für eine Brennkraftmaschine mit einem Einlass (11) und zylinderseitigen Austritten (14) für die Verbrennungsluft und Kanalstrukturen, die den Einlass mit den Austritten kommunizierend verbinden, wobei
- die Kanalstrukturen zumindest teilweise durch mindestens zwei Schalen (10) gebildet sind, welche entlang einer Trennfuge (16, 16a) unter Aufbringen einer Druckkraft miteinander verschweißt sind,
- die Trennfuge korrespondierende Fügefläche (20) aufweist, die zumindest in Teilbereichen in einem Winkel von weniger als 90° zur Richtung der besagten Druckkraft D ausgerichtet ist und
- die Summe dieser Teilbereiche bei der Verschweißung der Ansaugvorrichtung eine erste Querkraft Q₁ zur besagten Druckkraft D erzeugt,
**dadurch gekennzeichnet, dass** in den Schalen (10) korrespondierende Zusatzflächen (19) angeordnet sind, die bei der Verschweißung eine zweite Querkraft Q_{2'} der besagten Druckkraft erzeugen, die die besagte erste Querkraft zumindest teilweise ausgleicht.

2. Ansaugvorrichtung nach Anspruch 1, **dadurch gekennzeichnet, dass** die Trennfuge (16, 16a) stetig gekrümmt ist.

3. Ansaugvorrichtung nach einem der vorherigen Ansprüche, **dadurch gekennzeichnet, dass** die korrespondierenden Zusatzflächen (19) aus einer Verbreiterung der Fügeflächen (20) bestehen.

4. Ansaugvorrichtung nach einem der vorherigen Ansprüche, **dadurch gekennzeichnet, dass** die korrespondierenden Zusatzflächen (19) im Inneren der Schalen (10) angeordnet sind.

5. Ansaugvorrichtung nach einem der vorherigen Ansprüche, **dadurch gekennzeichnet, dass** die korrespondierenden Zusatzflächen (19) in Anbindungspunkte (18, 18a), die zur Befestigung der Ansaugvorrichtung oder von Zusatzaggregaten an der Ansaugvorrichtung vorgesehen sind, integriert sind.

6. Ansaugvorrichtung nach einem der vorherigen Ansprüche, **dadurch gekennzeichnet, dass** die korrespondierenden Zusatzflächen (19) zumindest teilweise einen Winkel α zur Druckkraft D von weniger als 24° aufweisen.

## Claims

1. Intake device for an internal combustion engine having an inlet (11), cylinder-side outlets (14) for the combustion air and duct structures, which connect the inlet to the outlets in a communicating manner, wherein
- the duct structures are formed at least partially by means of at least two shells (10), which are welded together along a separating line (16, 16a) under the application of a compressive force,
- the separating line includes corresponding joint face (20), which is orientated at least in partial regions at an angle of less than 90° relative to the direction of the said compressive force D and
- the sum of these partial regions, when the intake device is welded, creates a first transverse force Q₁ relative to the said compressive force D,
**characterised in that** in the shells (10) are disposed corresponding additional faces (19), which, during the welding, create a second transverse force Q₂ of the said compressive force, which balances out at least partially the said first transverse force.

2. Intake device according to claim 1, **characterised in that** the separating line (16, 16a) is continuously curved.

3. Intake device according to one of the preceding claims, **characterised in that** the corresponding additional faces (19) comprise a widening of the joint faces (20).

4. Intake device according to one of the preceding claims, **characterised in that** the corresponding additional faces (19) are disposed in the interior of the shells (10).

5. Intake device according to one of the preceding claims, **characterised in that** the corresponding additional faces (19) are incorporated in mounting points (18, 18a), which are provided for securing the intake device or additional units to the intake device.

6. Intake device according to one of the preceding claims, **characterised in that** the corresponding additional faces (19) include at least partially an angle α relative to the compressive force D of less than 24°.

## Revendications

1. Dispositif d'admission pour un moteur à combustion interne, comportant une entrée (11) et des sorties (14) côté cylindres pour l'air de combustion ainsi que des structures de canaux qui relient l'entrée aux sorties de manière à ce qu'elles communiquent, dans lequel,
- les structures de canaux sont formées au moins partiellement par au moins deux coquilles (10) soudées l'une à l'autre le long d'un plan de joint (16, 16a) sous l'action d'une force de pression,
- le plan de joint présente une surface de jointure correspondante (20), qui est orientée au moins dans des zones partielles selon un angle inférieur à 90° par rapport à la direction de la force de pression D et
- la somme de ces zones partielles génère, lors du soudage du dispositif d'admission, une première force transversale Q₁ par rapport à la force de pression D,
**caractérisé en ce que**
dans les coquilles (10) sont disposées des surfaces supplémentaires correspondantes (19) qui, lors du soudage, génèrent une deuxième force transversale Q₂ de la force de pression, qui compense au moins partiellement la première force transversale.

2. Dispositif d'admission selon la revendication 1,
**caractérisé en ce que**
le plan de joint (16, 16a) est courbé de façon continue.

3. Dispositif d'admission selon l'une des revendications précédentes,
**caractérisé en ce que**
les surfaces supplémentaires correspondantes (19) se composent d'un élargissement des surfaces de jointure (20).

4. Dispositif d'admission selon l'une des revendications précédentes,
**caractérisé en ce que**
les surfaces supplémentaires correspondantes (19) sont disposées à l'intérieur des coquilles (10).

5. Dispositif d'admission selon l'une des revendications précédentes,
**caractérisé en ce que**
les surfaces supplémentaires correspondantes (19) sont intégrées dans des points de liaison (18, 18a) prévus pour la fixation du dispositif d'admission ou de modules supplémentaires au niveau du dispositif d'admission.

6. Dispositif d'admission selon l'une des revendications précédentes,
**caractérisé en ce que**
les surfaces supplémentaires correspondantes (19) présentent au moins partiellement un angle α inférieur à 24° par rapport à la force de pression D.
